# EUROPÄISCHE PATENTSCHRIFT

(11) **EP 1 277 603 B1**
(45) Veröffentlichungstag und Bekanntmachung des Hinweises auf die Patenterteilung: **05.03.2008**
(21) Anmeldenummer: 02014672.6
(22) Anmeldetag: 03.07.2002
(51) Int. Cl.: B60G 3/20, B60G 7/00

(54) **Mehrlenker-Einzelradaufhängung, insbesondere Aufhängung eines lenkbaren Vorderrads eines Kraftfahrzeugs**
Multi link independent wheel suspension, in particular suspension of a steerable front wheel of a motor vehicle
Suspension de roue indépendante multibras, en particulier suspension d'une roue avant directrice pour véhicule automobile

(30) Priorität: 19.07.2001 DE 10135193
(43) Veröffentlichungstag der Anmeldung: 22.01.2003
(73) Patentinhaber: Bayerische Motoren Werke Aktiengesellschaft, 80809 München (DE)
(72) Erfinder: Eilers, Jan, 82343 Pöcking (DE); Graf, Thomas, 86633 Neuburg (DE)

(56) Entgegenhaltungen:
- EP-A- 0 289 889
- EP-A- 0 301 782
- FR-A- 2 777 224
- JP-A- 7 251 615
- US-A- 3 510 148

## Beschreibung

Die Erfindung betrifft eine Mehrlenker-Einzelradaufhängung eines Fahrzeugs, insbesondere die Aufhängung eines lenkbaren Vorderrads eines Kraftfahrzeugs, mit zumindest zwei unterhalb des Radmittelpunktes am Radträger gelenkig befestigten Stablenkern, über die der Radträger unter Zwischenschaltung eines Hilfslenkers, indirekt letztlich am Fahrzeugbau abgestützt sind, wobei die beiden Stablenker mit ihren dem Radträger gegenüberliegenden Enden zumindest geringfügig gelenkig am Hilfslenker befestigt sind und dieser Hilfslenker über zumindest ein komfortorientiertes Lager und eine weitere Lagerstelle entweder direkt oder unter Zwischenschaltung eines im wesentlichen starr mit dem Fahrzeugaufbau verbundenen Achsträgers indirekt mit dem Fahrzeugaufbau verbunden ist. Zum technischen Umfeld wird neben der DE 100 06 676 A1 insbesondere auf die EP 0 289 889 B1 verwiesen, ferner auf die US 3 510 148 A, die zur Bildung des Oberbegriffs des Patentanspruchs 1 herangezogen wurde.

Gegenstand der vorliegenden Erfindung ist somit die Anordnung der Lenker in der unteren Lenkerebene einer Mehrlenker-Einzelradaufhängung. Am weitesten verbreitet sind Einzelradaufhängungen mit einem sog. Dreieckslenker in der unteren Lenkerebene, der über ein Kugelgelenk mit dem Radträger verbunden ist und dessen Drehachse karosserieseitig, d.h. am Fahrzeugaufbau annährend parallel zur Fahrzeuglängsachse ausgerichtet vorgesehen ist. Ein Beispiel hierfür zeigt die oben erstgenannte DE 100 06 676 A1. Daneben sind Mehrlenker-Einzelradaufhängungen bekannt, bei denen in der unteren Lenkerebene, d.h. in Vertikalrichtung betrachtet unterhalb des Radmittelpunktes, zwei Stablenker vorhanden sind.
Bei Fahrzeugen, bei denen die Lenkung, d.h. insbesondere die Spurstange des lenkbaren Rades auch untenliegend, d.h. im Bereich der unteren Lenkerebene angeordnet ist, sind diese genannten Stablenker üblicherweise in Zugstrebenbauweise oder in Druckstrebenbauweise angeordnet, wobei jeweils ein Lenker möglichst in Fahrzeug-Längsrichtung nach vorne oder nach hinten ausgerichtet ist (und demzufolge als Zugstrebe oder als Druckstrebe fungiert), während der zweite Lenker ungefähr quer zur Fahrzeug-Längsrichtung ausgerichtet ist und somit einen Querlenker darstellt. Hiermit kann eine günstige "Aufgabentrennung" der Lenker, nämlich hinsichtlich der Aufnahme von Längs- und Seitenkräften, sowie ein gewünschtes elasto-kinematisches Verhalten der Radführung erzielt werden. Dabei wird der annähernd in Fahrzeug-Längsrichtung verlaufende Lenker häufig mit einem aufwändigen Gummilager zum Fahrzeugaufbau oder zu einem sog. Achsträger hin gelagert, um eine komfortverbessernde Längsfederung des Rades beim Überfahren von Hindernissen zu ermöglichen. Aufgrund dieser Gummilagerung ist dieser Lenker jedoch nicht gut geeignet, die Federung zu tragen, über die sich der Fahrzeugaufbau in Vertikalrichtung an der zumeist als Doppelquerlenker-Achse ausgebildeten Radaufhängung abstützt.

Um diesen Nachteil zu eliminieren, ist es bereits bekannt (vgl. die oben zweitgenannte EP 0 289 889 B1), die Stablenker der unteren Ebene in Draufsicht betrachtet V-förmig auszurichten, wobei der erste Stablenker vom Radträger aus nach schräg vorne verläuft und der zweite Stablenker nach schräg hinten und zwar derart, dass der Betrag des aufgespannten Winkels zwischen einem Lenker und der Fahrzeug-Längsachse bei beiden Lenkern ähnlich ist. Es gibt damit keine eindeutige Zug- oder Druckstrebe und keinen eindeutigen Querlenker mehr. Da jedoch das Aufzwingen eines günstigen elastokinematischen Vorspurverhaltens des Rades beim Längsfedern bei dieser Lenkeranordnung problematisch ist, sind die Lenker fahrzeugaufbauseitig über relativ harte Gummilager an einem (Vorder-)Achsträger befestigt. Hieraus resultiert dann ein akzeptables elastokinematisches Vorspurverhalten des Rades beim genannten Längsfedern.

Der aufgrund der harten Gummilager fehlende Fahr-Komfort wird im bekannten Stand der Technik über relativ weiche Gummilager zwischen dem (Vorder-)Achsträger und dem Fahrzeugaufbau wieder hergestellt, d.h. der Achsträger ist möglichst elastisch gelagert. In diesen elastischen Gummilagern zwischen dem Achsträger und dem Fzg.-Aufbau wird auch die grundsätzlich gewünschte Bewegung beim Längsfedern ermöglicht. Jedoch bringt die Verwendung eines elastisch gelagerten Achsträgers Nachteile sowohl hinsichtlich der Funktion als auch der Kosten und insbesondere hinsichtlich des Gewichts mit sich, da der elastisch gelagerte Achsträger nicht zur Versteifung des Fzg.-Aufbaus, d.h. der Karosserie herangezogen werden kann. Auch hinsichtlich der Aufhängung eines Lenkgetriebes ist ein elastisch gelagerter Achsträger eher nachteilig.

Aus der US 3 510 148 A, die auf das Jahr 1967 zurückgeht, ist eine Mehrlenker-Einzelradaufhängung eines lenkbaren Vorderrads nach dem Oberbegriff des Patentanspruchs 1 bekannt, bei der eine besonders ausgeprägte Quernachgiebigkeit der unteren Radführungsglieder, d.h. der genannten Stablenker erzielt werden soll. Bei heutigen Vorderradaufhängungen ist jedoch eine solche Quernachgiebigkeit äußerst unerwünscht; vielmehr soll eine hohe Steifigkeit gegenüber am Rad angreifenden Seitenkräften vorliegen, um ein gutes Lenkverhalten zu erzielen.

Hiermit soll nun eine Abhilfemaßnahme für die weiter oben geschilderte Problematik aufgezeigt werden (= Aufgabe der vorliegenden Erfindung), wobei zufälligerweise einige der im Rahmen der Lösung dieser Aufgabe verwendeten Merkmale bereits in der letztgenannten US 3 510 148 A enthalten sind, wenngleich diese Schrift zur Lösung der hiermit gestellten Aufgabe nichts beitragen kann.
Die Lösung dieser Aufgabe ist für eine Mehrlenker-Einzelradaufhängung nach dem Oberbegriff des Anspruchs 1 also dadurch gekennzeichnet, dass die weitere Lagerstelle als Gelenk, insbesondere Kugelgelenk, ausgebildet und derart angeordnet ist, dass in Draufsicht ein durch dieses Gelenk sowie durch den radträgerseitigen Schnittpunkt der beiden Stablenker verlaufender sog. Polstrahl dieses Verbunds von Stablenkern und Hilfslenker mit einer die Lenkbewegung des Radträgers bestimmenden Spurstange einen auf der Innenseite des Vorderrades liegenden Pol bildet. Vorteilhafte Aus- und Weiterbildungen sind Inhalt der Unteransprüche.

Es sind also die beiden unteren Stablenker mit ihrem dem Radträger abgewandten Ende an einem Hilfslenker befestigt, der als Verbindungsglied zwischen den Stablenkern und dem Fahrzeugaufbau oder einem starr mit diesem verschraubten Achsträger wirkt. Bevorzugt sind dabei die Stablenker mittels relativ harter Gummilager am Hilfslenker befestigt, woraus ein günstiges kinematisches Verhalten und insbesondere ein gewünschtes elastokinematisches Vorspurverhalten des Rades beim Längsfedern resultiert. Dieses Längsfedern soll dabei bezüglich eines möglichst weit innen liegenden sog. Längsfeder-Pols erfolgen, der in Draufsicht von oben durch den Schnittpunkt der den Radträger führenden Spurstange mit einem sog. Polstrahl, der durch den Verbund der beiden genannten Stablenker mit dem genannten Hilfslenker in der beschriebenen Weise gebildet wird, definiert ist.

Ist der Hilfslenker direkt am Fahrzeugaufbau oder an der Karosserie befestigt, so ergibt sich wegen des Entfalls eines Achsträgers eine besonders hohe Gewichtsersparnis. Jedoch kann es aus Gründen der Montagevereinfachung sowie insbesondere auch unter Steifigkeitsgesichtspunkten vorteilhafter sein, auch bei der hiermit vorgeschlagenen Mehrlenker-Einzelradaufhängung einen Achsträger vorzusehen, der dann jedoch - abweichend vom oben geschilderten bekannten Stand der Technik - im wesentlichen starr (und somit nicht über ausgesprochen weiche Gummilager) mit der Karosserie bzw. dem Unterboden des Fahrzeug-Aufbaus verbunden ist. Aufgrund dieser im wesentlichen starren Anbindung des Achsträgers an den Fahrzeugaufbau muss der Achsträger für sich alleine betrachtet keinen ausgesprochen hohen Steifigkeits-Anforderungen genügen und kann somit in gewichtsoptimierter Leichtbauweise ausgeführt sein.

Was die Anbindung des Hilfslenkers am Fahrzeugaufbau oder an einem im wesentlichen starr mit diesem verbundenen (verschraubten) Achsträger betrifft, so ist hierfür zum einen ein komfortorientiertes, d.h. relativ weiches Lager bzw. eine entsprechende weiche Lagerung vorgesehen. Bevorzugt kommt hierfür ein relativ weiches Gummilager zum Einsatz. Dabei wird vorgeschlagen, den Hilfslenker, der quasi einen weiteren Stab-Lenker bildet, annähernd in Fahrzeug-Längsrichtung auszurichten, wodurch ein günstiges Längsfederverhalten der Radaufhängung erzielt wird. Neben dieser komfortorientierten Lagerung ist der Hilfslenker über eine weitere Lagerstelle am Fahrzeugaufbau bzw. am Achsträger zu lagern, wofür ein Gelenk, insbesondere ein Kugelgelenk vorgeschlagen wird. Diese Bauweise bringt besondere Vorteile hinsichtlich des benötigten Bauraums (bspw. für einen Bremssattel, insbesondere auch für eine Rad-Antriebswelle) sowie hinsichtlich der Feder-Dämpferanordnung in Verbindung mit einem günstigem Vorspurverhalten bei einer komfortablen Radlängssteifigkeit mit sich. Insbesondere jedoch definiert dieses Gelenk das kinematische Verhalten des Verbundes aus den beiden Stablenkern und dem daran angelenkten Hilfslenker. Im Hinblick auf das genannte günstige Vorspurverhalten soll ein sog. Polstrahl dieses Verbundes, der nämlich in Draufischt von oben durch den radträgerseitigen Schnittpunkt der Stablenker sowie das weitere Gelenk des Hilfslenkers gebildet wird, zusammen mit einem weiteren radführenden Lenker, nämlich der Spurstange, einen bezüglich dieses Rades innenliegenden Pol bilden.

Dabei hat es sich als vorteilhaft herausgestellt, wenn an einer erfindungsgemäßen Vorderrad-Aufhängung der in Fahrzeug-Fahrtrichtung betrachtet vordere untere Stablenker des Radträgers am vorderen Ende des Hilfslenkers befestigt ist, an dessen anderen (und somit hinteren) Ende das genannte komfortorientierte Lager vorgesehen ist. In Fahrtrichtung vor diesem komfortorientierten Lager ist dann der hintere Stablenker des Radträgers angebunden und zwischen den Anbindungsstellen der beiden Stablenker ist am Hilfslenker dessen zweite Lagerstelle, nämlich das Gelenk/Kugelgelenk vorgesehen.

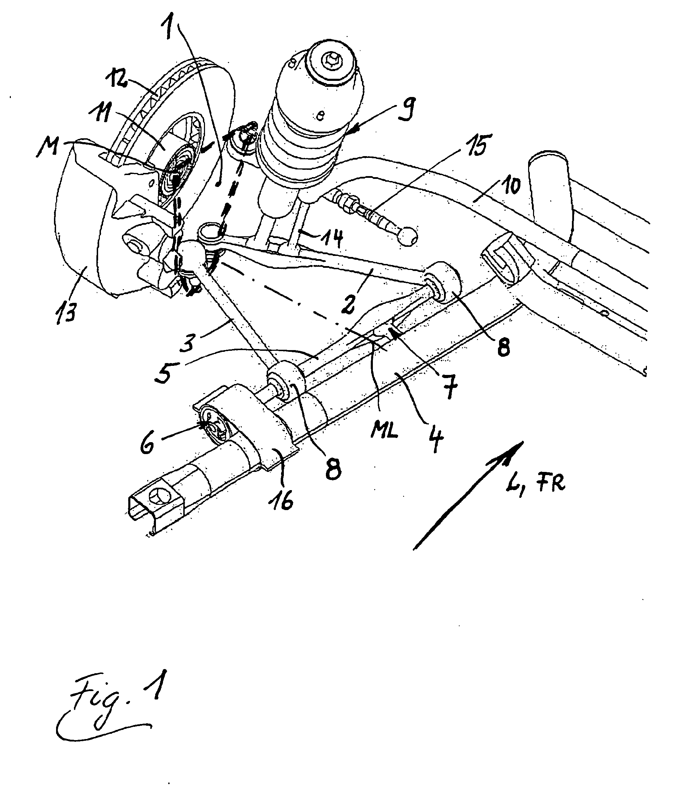

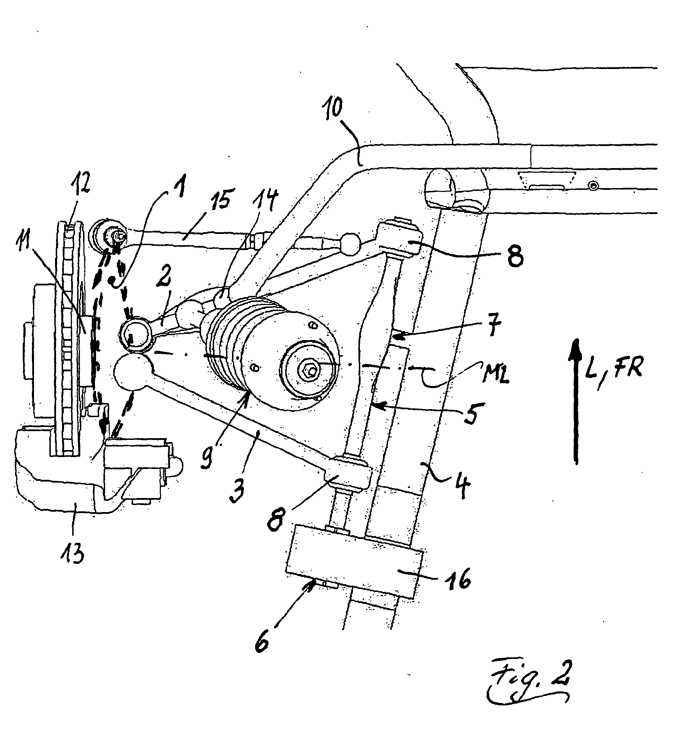

Im folgenden wird die Erfindung anhand eines bevorzugten Ausführungsbeispieles weiter erläutert, wobei die beigefügte **Figur 1** eine räumliche Darstellung des unteren Teils einer erfindungsgemäßen Aufhängung eines lenkbaren Vorderrads eines Kraftfahrzeugs zeigt und wobei im wesentlichen nur die für das Verständnis wesentlichen Elemente gezeigt sind. **Figur 2** zeigt die entsprechende Draufsicht von oben.

Lediglich abstrakt in Form einzelner kurzer Doppelstriche dargestellt ist ein Radträger 1, an welchem unter anderem eine Radnabe 11, eine Bremsscheibe 12 sowie ein Bremssattel 13 vorgesehen bzw. befestigt bzw. aufgehängt ist. Dieser Radträger 1 trägt insbesondere auch das nicht gezeigte linke lenkbare Vorderrad des Fahrzeugs, insbesondere Personenkraftwagens.

Zur Führung dieses Radträgers 1 sind unter anderem zwei unterhalb des Radmittelpunktes M gelenkig am Radträger befestigte Stablenker 2, 3 vorgesehen. Diese Stablenker stellen letztendlich die Verbindung zwischen dem Radträger 1 und dem nicht näher dargestellten Fahrzeug-Aufbau (bzw. der Karosserie) des Fahrzeugs/PKW's her. Wie insbesondere aus Figur 2 hervorgeht, sind die beiden Stablenker 2, 3 in Draufsicht betrachtet V-förmig angeordnet, wobei eine Mittellinie ML zwischen den beiden Stablenkern 2, 3 annähernd senkrecht zur Fahrzeug-Längsrichtung L verläuft.

Im wesentlichen starr am Fahrzeugaufbau bzw. am Unterboden des PKW's befestigt bzw. angeschraubt ist ein Achsträger 4, der aus mehreren hier nicht näher erläuterten einzelnen Streben zusammengesetzt ist. Am Achsträger 4 ist ein annähernd in Fahrzeug-Längsrichtung L verlaufender Hilfslenker 5 angelenkt, und zwar über zwei Lagerstellen 6, 7. An diesem Hilfslenker 5 wiederum sind die beiden Stablenker 2, 3 mit ihren dem Radträger 1 abgewandten Enden angelenkt, und zwar jeweils über ein relativ hartes Gummilager 8. Die Lagerstelle 6 des Hilfslenkers 5 ist als komfortorientiertes, relativ weiches Gummilager (ebenfalls Bezugsziffer 6) ausgebildet, das geeignet (hier mittels einer Schelle 16) am Achsträger 4 befestigt ist, und die Lagerstelle 7 des Hilfslenkers 5 am Achsträger 4 ist als Kugelgelenk (ebenfalls Bezugsziffer 7) ausgebildet.

Wie ersichtlich ist der in Fahrzeug-Fahrtrichtung FR betrachtet vordere untere Stablenker 2 am vorderen Ende des Hilfslenkers 5 befestigt, an dessen anderen und somit hinteren Ende das genannte komfortorientierte Lager 6 vorgesehen ist. In Fahrtrichtung FR vor diesem komfortorientierten Lager 6 ist der hintere Stablenker 3 des Radträgers 1 angebunden und zwischen den Anbindungsstellen 8 bzw. Gummilagern 8 der beiden Stablenker 2, 3 ist am Hilfslenker 5 dessen zweite Lagerstelle 7, nämlich das Kugelgelenk 7 vorgesehen. Hierfür ragt ein entsprechender Kugelzapfen, der fest mit dem Achsträger 4 verbunden ist, in eine entsprechende Kugelaufnahme am Hilfslenker 5 hinein.

Weitere figürlich dargestellte Elemente der Radaufhängung bzw. der gesamten Achse sind ein Feder-Dämpferbein 9, das sich ebenso wie ein Quer-Stabilisator 10 (mit seiner Pendelstütze 14) am vorderen Stablenker 2 abstützt. Ferner ist eine Spurstange 15 gezeigt, die Bestandteil einer nicht weiter dargestellten Lenkung ist und mit Hilfe derer der Radträger 1 um seine Lenkachse verschwenkbar ist. Nicht figürlich dargestellt ist der oberhalb des Radmittelpunktes M liegende Umfang der Radaufhängung, wobei es sich bspw. um einen Dreiecks-Querlenker oder einen Lenkerverbund handeln kann.

Die Vorteile, welche eine erfindungsgemäße Mehrlenker-Einzelradaufhängung besitzt, wurden weiter oben ausführlich erläutert, so dass nur noch darauf hingewiesen sei, dass durchaus eine Vielzahl von Details insbesondere konstruktiver Art abweichend vom gezeigten Ausführungsbeispiel gestaltet sein kann, ohne den Inhalt der Patentansprüche zu verlassen.

### Bezugszeichenliste:

- 1: Radträger
- 2: (vorderer) unterer Stablenker
- 3: (hinterer) unterer Stablenker
- 4: Achsträger
- 5: Hilfslenker
- 6: komfortorientiertes Lager / Lagerstelle
- 7: Kugel-Gelenk / Lagerstelle
- 8: relativ hartes Gummilager
- 9: Feder-Dämpferbein
- 10: Quer-Stabilisator
- 11: Radnabe
- 12: Bremsscheibe
- 13: Bremssattel
- 14: Pendelstütze
- 15: Spurstange
- 16: Schelle
- FR: Fahrzeug-Fahrtrichtung
- L: Fahrzeug-Längsrichtung
- M: Radmittelpunkt
- ML: Mittenlinie zwischen 2, 3

## Patentansprüche

1. Mehrlenker-Einzelradaufhängung eines lenkbaren Vorderrads eines Kraftfahrzeugs, mit zwei unterhalb des Radmittelpunktes (M) am Radträger (1) gelenkig befestigten Stablenkern (2, 3), über die der Radträger (1) unter Zwischenschaltung eines Hilfslenkers (5), indirekt letztlich am Fahrzeugbau abgestützt sind, wobei die beiden Stablenker (2, 3) mit ihren dem Radträger (1) gegenüberliegenden Enden zumindest geringfügig gelenkig am Hilfslenker (5) befestigt sind und dieser Hilfslenker (5) über zumindest ein komfortorientiertes Lager (6) und eine weitere Lagerstelle entweder direkt oder unter Zwischenschaltung eines im wesentlichen starr mit dem Fahrzeugaufbau verbundenen Achsträgers (4) indirekt mit dem Fahrzeugaufbau verbunden ist,
dass die weitere Lagerstelle als Gelenk (7), insbesondere Kugelgelenk, ausgebildet und derart angeordnet ist, dass in Draufsicht von oben ein durch dieses Gelenk (7) sowie durch den radträgerseitigen Schnittpunkt der beiden Stablenker (2,3) verlaufender sog. Polstrahl dieses Verbunds von Stablenkern (2, 3) und Hilfslenker (5) mit einer die Lenkbewegung des Radträgers (1) bestimmenden Spurstange (15) einen auf der Innenseite des Vorderrades liegenden Pol bildet.

2. Mehrlenker-Einzelradaufhängung nach Anspruch 1,
**dadurch gekennzeichnet, dass** die Stablenker (2, 3) mittels relativ harter Gummilager (8) am Hilfslenker (5) befestigt sind.

3. Mehrlenker-Einzelradaufhängung nach Anspruch 1 oder 2,
**dadurch gekennzeichnet, dass** der Hilfslenker (5) annähernd in Fahrzeug-Längsrichtung (L) ausgerichtet ist.

4. Mehrlenker-Einzelradaufhängung nach einem der vorangegangenen Ansprüche,
**dadurch gekennzeichnet, dass** die beiden Stablenker (2, 3) in Draufsicht betrachtet V-förmig angeordnet sind, wobei die Mittellinie (ML) zwischen den beiden Stablenkern (2, 3) im wesentlichen senkrecht zur Fahrzeug-Längsrichtung (L) verläuft.

5. Mehrlenker-Einzelradaufhängung nach einem der vorangegangenen Ansprüche,
**dadurch gekennzeichnet, dass** der in Fahrzeug-Fahrtrichtung (FR) betrachtet vordere untere Stablenker (2) des Radträgers (1) am vorderen Ende des Hilfslenkers (5) befestigt ist, an dessen hinteren Ende das genannte komfortorientierte Lager (6) vorgesehen ist, und dass in Fahrtrichtung (FR) betrachtet vor diesem komfortorientierten Lager (6) der hintere untere Stablenker (3) des Radträgers (1) angebunden und zwischen den Anbindungsstellen (8) der beiden Stablenker (2, 3) am Hilfslenker (5) das Gelenk/Kugelgelenk (7) vorgesehen ist.

## Claims

1. A multi-link independent wheel suspension of a steerable front wheel of a motor vehicle, with two rod links (2, 3) which are articulated with the Wheel support (1) below the centre (M) of the wheel, and via which the wheel support (1) is ultimately indirectly supported on the vehicle body with the interconnection of an auxiliary link (5), wherein the two rod links (2, 3) are at least slightly articulated with the auxiliary link (5) by their ends opposite the wheel support (1) and this auxiliary link (5) is connected to the vehicle body via at least one bearing (6) intended for comfort and a further bearing either directly or indirectly with the interconnection of an axle support (4) substantially rigidly connected to the vehicle body, in that the further bearing is configured as a joint (7), more especially a ball joint and is positioned such that, seen in a plan view from above, a so-called pole beam running through this joint (7) and through the wheel support-side intersection of the two rod links (2, 3), of this combination of rod links (2, 3) and auxiliary link (5) forms a pole located on the inside of the front wheel with a tie rod (15) determining the steering movement of the wheel support (1).

2. A multi-link independent wheel suspension according to claim 1, **characterised in that** the rod links (2, 3) are secured to the auxiliary link (5) by relatively hard rubber mounts (8).

3. A multi-link independent wheel suspension according to claim 1 or claim 2, **characterised in that** the auxiliary link (5) is aligned approximately in the longitudinal direction (L) of the vehicle.

4. A multi-link independent wheel suspension according to any one of the preceding claims, **characterised in that** the two rod links (2, 3), seen in a plan view, are positioned in the shape of a V, the centre line (ML) running substantially vertically to the longitudinal direction (L) of the vehicle between the two rod links (2, 3).

5. A multi-link independent wheel suspension according to any one of the preceding claims, **characterised in that** the lower front rod link (2), seen in the travelling direction (FR) of the vehicle, of the wheel support (1) is attached to the leading end of the auxiliary link (5), at the trailing end of which the mentioned bearing (6) intended for comfort is provided and **in that** the lower rear rod link (3) of the wheel support (1) is coupled upstream of this bearing (6) intended for comfort, seen in the direction of travel (FR) and the joint/ball joint (7) is provided on the auxiliary link (5) between the connection points (8) of the two rod links (2, 3).

## Revendications

1. Suspension multibras de roue indépendante, en particulier d'une roue avant directrice d'un véhicule automobile, dans laquelle
- deux bras de suspension (2, 3) sont articulés au support de roue (1) en dessous du centre (M) de la roue et par ces bras le support (1) s'appuie finalement de manière indirecte sur la structure du véhicule avec interposition d'un bras auxiliaire (5),
- les deux bras de suspension (2, 3), sont fixés, par leurs extrémités éloignées du support de roue (1), en étant au moins faiblement articulés au bras auxiliaire (5) qui, par au moins un palier (6) orienté vers le confort et un autre palier est, soit directement, soit indirectement par interposition d'un support d'essieu (4), relié de manière essentiellement rigide à la structure du véhicule,
**caractérisée en ce que**
l'autre palier est constitué par une articulation (7), notamment une articulation sphérique et il est disposé de manière que vu de dessus en plan, un rayon passant par cette articulation (7) et le point où se coupent, vers la roue, les deux bras de suspension (2, 3) et qu'on appelle rayon polaire de l'ensemble constitué par les bras de suspension (2, 3) et le bras auxiliaire (5), forme avec une barre d'accouplement (15), définissant le mouvement directionnel du support de roue (1), un pôle situé sur la face interne de la roue avant.

2. Suspension multibras de roue indépendante selon la revendication 1,
**caractérisée en ce que**
les bras de suspension (2, 3) sont fixés sur le bras auxiliaire (5) par un palier (8) en caoutchouc relativement dur.

3. Suspension multibras de roue indépendante selon la revendication 1 ou 2,
**caractérisée en ce que**
le bras auxiliaire (5) est orienté à peu près selon la direction longitudinale (L) du véhicule automobile.

4. Suspension multibras de roue indépendante selon une des revendications précédentes,
**caractérisée en ce que**
les deux bras de suspension (2, 3), vus en plan, sont disposés selon un V dont la ligne médiane (ML), entre les deux bras de suspension (2, 3) est essentiellement perpendiculaire à la direction longitudinale (L) du véhicule automobile.

5. Suspension multibras de roue indépendante selon une des revendications précédentes,
**caractérisée en ce que**
- le bras de suspension inférieur (2) de la roue (1), situé en avant par rapport au sens de déplacement (FR) du véhicule, est fixé à l'extrémité avant du bras auxiliaire (5) tandis que sur l'extrémité arrière de celui-ci est prévu le palier (6) orienté vers le confort,
- le bras de suspension inférieur (3) de la roue (1), situé par rapport au sens de déplacement (FR) du véhicule, en avant de ce palier (6) est relié au bras auxiliaire (5), et
- l'articulation (7) sphérique se situe entre les deux points de liaison (8) des deux bras de suspension (2, 3) et le bras auxiliaire (5).
